# FASCICULE DE BREVET EUROPEEN

(11) **EP 2 931 509 B1**
(45) Date de publication et mention de la délivrance du brevet: **08.02.2017**
(21) Numéro de dépôt: 13811857.5
(22) Date de dépôt: 13.12.2013
(51) Int. Cl.: B29D 30/30, B29D 30/44, B29D 30/28, B65H 19/28

(54) **PROCÉDÉ ET DISPOSITIF DE FABRICATION D'ÉBAUCHE DE PNEUMATIQUE**
VERFAHREN UND VORRICHTUNG ZUR HERSTELLUNG EINES REIFENROHLINGS
METHOD AND DEVICE FOR MANUFACTURING A GREEN TYRE

(30) Priorité: 13.12.2012 FR 1261989
(43) Date de publication de la demande: 21.10.2015
(73) Titulaire: Compagnie Générale des Etablissements Michelin, 63000 Clermont-Ferrand (FR); Michelin Recherche et Technique S.A., 1763 Granges-Paccot (CH)
(72) Inventeur: DENAVIT, Franck, F-63040 Clermont-Ferrand Cedex 9 (FR)
(74) Mandataire: Noel, Luminita
(86) Numéro de dépôt international: PCT/EP2013/076512
(87) Numéro de publication internationale: WO 2014/090983

(56) Documents cités:
- EP-A1- 1 867 467
- FR-A- 1 587 096
- US-A- 5 935 377
- US-A1- 2009 159 579

## Description

La présente invention se rapporte au domaine de fabrication des pneumatiques, et plus particulièrement aux pneumatiques dits autoporteurs pour véhicule de tourisme.

Les pneumatiques dits autoporteurs permettent au véhicule de rouler à pression réduite sur une certaine distance. Ces pneumatiques comportent des renforts situés dans les flancs du pneumatique afin de permettre de porter la charge du véhicule lorsque la pression diminue fortement. Les renforts des flancs se présentent sous la forme de profilés à base de caoutchouc de forte épaisseur comparée à celle des autres profilés déposés dans cette zone.

Parmi les pneumatiques pour véhicule de tourisme, on connaît les pneumatiques à carcasse radiale, couramment appelés « pneumatiques radiaux », qui sont préférés aux pneumatiques dits « bias » grâce aux qualités d'endurance, de confort, de légèreté et de faible résistance au roulement conférées par la technologie radiale. Le pneumatique radial est essentiellement constitué de flancs souples et d'un sommet plus rigide, les flancs s'étendant radialement des bourrelets jusqu'aux épaules, les épaules délimitant entre elles le sommet, le sommet supportant la bande de roulement du pneumatique.

Le procédé de fabrication d'une ébauche de pneumatique à carcasse radiale consiste, de manière connue, à déposer par enroulement, sur un tambour cylindrique rotatif, les différents profilés qui constituent la carcasse de l'ébauche de pneumatique en commençant par la gomme d'étanchéité. Dans le cas des pneumatiques autoporteurs, on dépose les renforts des flancs sur la gomme d'étanchéité avant de déposer la nappe de renfort carcasse, puis on continue avec les autres profilés utilisés de manière classique dans les pneumatiques radiaux. La nappe de renfort carcasse se présente sous forme d'un tronçon de bande constituée, dans un pneumatique radial, de fils enrobés dans un mélange caoutchoutique. Les fils, textiles ou métalliques, sont orientés axialement ou parallèlement à l'axe longitudinal de la carcasse (ce qui signifie qu'ils sont orientés perpendiculairement à la direction de pose sur le tambour d'assemblage). Lors du procédé d'assemblage, la nappe est déposée par un serveur sur le tambour, elle est enroulée par ce dernier, puis ses bords sont aboutés.

Le document US 5 953 377 décrit un procédé et un dispositif pour réunir sur un tambour les deux extrémités d'une bande de caoutchouc, notamment une bande de roulement ayant des bords latéraux minces en coupe transversale. Un tel aboutage est effectué en disposant des ventouses au centre et sur les bords latéraux de la bande et en appliquant ensuite un effort d'allongement au niveau des parties amincies des bords latéraux à l'une des extrémités de la bande. Cet effort est appliqué aux ventouses dans la direction longitudinale de la bande de roulement juste avant l'aboutement des deux parties. Ce document ne concerne pas l'assemblage des nappes formant une carcasse de pneumatique autoporteur ayant des profilés de gomme d'épaisseur importante au sein de la carcasse.

Un problème lié à l'assemblage des pneumatiques dits autoporteurs et qui surgit lors de la pose de la nappe de renfort carcasse sur des profilés de renfort de flancs, ayant une épaisseur importante et déjà posés sur le tambour, est le manque d'adhérence de la nappe de renfort avec ces profilés, ce qui est dû principalement à l'air qui est emprisonné lors de l'assemblage.

Le document EP 1 625 931 apporte une solution à ce problème qui consiste, dans un premier cas, à modifier le tambour d'assemblage en aménageant des gorges circonférentielles dans la zone de dépose des renforts de flancs. Cette solution impose toutefois l'utilisation de tambours spécifiques à chaque type et dimension de pneumatique et n'est pas économiquement viable. Ce document décrit par ailleurs une autre solution qui consiste à recouvrir le tambour d'un revêtement souple en une mousse de polyuréthane. Dans ce cas, l'utilisation d'un revêtement souple « standard » est limitée à l'utilisation de renforts de flancs peu épais, l'assemblage des renforts plus épais nécessitant le changement du revêtement souple afin d'adapter l'épaisseur du revêtement à celle des renforts utilisés. Ceci implique des manipulations supplémentaires lors du passage d'un type de pneumatique à un autre et pénalise la productivité.

Afin de pallier à ces problèmes, le document EP 1 867 467 au nom de la demanderesse propose une solution qui consiste à utiliser un tambour cylindrique rotatif de type classique sur lequel on dépose une gomme d'étanchéité, puis les profilés de renfort de flancs et sur lequel on rapporte ensuite la nappe de renfort carcasse qui est, elle, délivrée par un tapis à une vitesse linéaire égale à la vitesse circonférentielle de la gomme d'étanchéité sur le tambour d'assemblage. La pose de la nappe de renfort carcasse est suivie du passage d'un rouleau d'application déformable qui exerce une pression au niveau des points de mise en contact de la nappe de renfort avec les composants précédemment déposés. Les fronts avant ou arrière de la nappe de renfort carcasse sont par ailleurs saisis par un transporteur comportant plusieurs ventouses disposées en ligne, à une même hauteur, le transporteur étant entraîné à la même vitesse linéaire que le tapis de manière à assurer la bonne vitesse de pose et de garantir l'alignement des fils de la nappe de renfort carcasse. Fonctionnant à satisfaction, ce procédé fait toutefois appel à de nombreux dispositifs, tels un tapis serveur de nappe, un transporteur, des dispositifs de régulation de vitesse et de finition de la pose, qui nécessitent un espace de travail important autour du tambour d'assemblage et également des réglages très fins afin de pouvoir les synchroniser.

Un objectif de l'invention est de remédier aux inconvénients précités et de proposer un procédé et un dispositif de fabrication d'ébauche de pneumatique du type autoporteur permettant d'utiliser un tambour d'assemblage dont la surface de réception des profilés est sensiblement cylindrique et de réduire significativement le nombre des dispositifs d'asservissement du tambour ainsi que l'espace nécessaire autour du tambour d'assemblage, tout en améliorant la qualité de l'assemblage.

Cet objectif est atteint par l'invention qui propose un procédé de fabrication d'ébauche de pneumatique par enroulement d'une nappe de renfort carcasse sur un tambour d'assemblage rotatif cylindrique de section circulaire dont la génératrice est rectiligne et définit une première surface de pose sur laquelle sont déposés plusieurs profilés axialement distants l'un de l'autre ayant une épaisseur donnée dont la ligne méridienne présente un profil galbé et définit une deuxième surface de pose, dans lequel : on saisit le front avant de la nappe de renfort carcasse à l'aide d'un dispositif de transport comportant un châssis supportant une rangée transversale de patins de préhension de nappe disposés en ligne, parallèlement audit front avant, on transfère la nappe de renfort carcasse, à l'aide dudit dispositif de transport, entre un poste d'approvisionnement et ledit tambour, on dépose le front avant de ladite nappe sur le tambour d'assemblage, on retire ledit dispositif de transport, on applique un rouleau d'application à profil déformable sur le front avant de ladite nappe et on exerce une pression dans la direction radiale sur la largeur de celle-ci correspondant aux points de mise en contact de la nappe de renfort carcasse avec ladite ligne méridienne et on fait tourner ledit tambour. Ledit procédé est caractérisé en ce qu'au moins l'un des patins de préhension est monté mobile par rapport aux patins adjacents entre une position dans laquelle tous les patins sont situés dans un même plan et une deuxième position dans laquelle au moins ledit patin est décalé en hauteur par rapport aux patins adjacents de manière à adapter le profil de ladite rangée transversale de patins au profil galbé de la ligne méridienne de ladite deuxième surface de pose.

Par profil galbé on comprend un profil non rectiligne, de préférence ondulé. Par patin de préhension mobile en hauteur par rapport aux patins adjacents d'une rangée transversale de patins, on comprend qu'au moins un patin (ou groupe de patins lorsqu'ils sont situés à une même hauteur) est mobile perpendiculairement à la direction longitudinale de la nappe par rapport à au moins l'un des patins voisins (ou groupe de patins lorsqu'ils sont situés à une même hauteur) de manière à ce que les extrémités de préhension de deux patins (ou groupes de patins) disposés côte-à-côte soit situées à des altitudes différentes. Ainsi, la distance entre les extrémités de préhension des différents patins de la rangée transversale est variable sur le front avant de la nappe carcasse et correspond au galbe de la ligne méridienne du tambour. Cette distance est mesurée dans un plan vertical, plan qui est parallèle à la direction radiale passant par le plan tangent à la génératrice supérieure du tambour d'assemblage, plan vertical qui est également perpendiculaire au plan de la nappe de renfort carcasse. Les patins de préhension se trouvent donc tous dans un même plan lorsqu'ils viennent en contact avec la nappe sur la table de stockage de celle-ci, puis, en emportant la nappe, ils se décalent et imposent un profil galbé au front avant de la nappe juste avant sa pose sur le tambour d'assemblage.

Par rangée transversale on comprend une rangée parallèle au front avant de la nappe et qui est parallèle à l'axe longitudinal de rotation du tambour. Cette mobilité en hauteur permet aux patins de préhension de la rangée de passer d'une première position dans laquelle les patins de préhension adjacents se trouvent à une même hauteur, dans un même plan, à une deuxième position dans laquelle au moins un patin de préhension se trouve décalé en hauteur par rapport aux patins adjacents ou, inversement, passer d'une position où l'un des patins est décalé par rapport aux patins adjacents, à une position où les patins se trouvent à un décalage moindre, voire alignés en hauteur. Le patin décalé en hauteur (ou les patins lorsque plusieurs patins sont mobiles et réglables en hauteur) est monté mobile sur son support en direction de la nappe, perpendiculairement à la direction longitudinale de celle-ci, afin que tous les patins soient situés au même niveau lorsqu'ils viennent au contact du front avant de celle-ci, et que le décalage soit obtenu par le déplacement vertical du patin mobile lorsque la nappe est soulevée de son support. Ainsi, en déplaçant en direction de la nappe de renfort carcasse l'un des patins de préhension de la rangée (ou un groupe de patins solidaires d'un support commun), par rapport à deux patins adjacents, on crée deux décalages en hauteur, entre le patin qu'on a déplacé et chacun des patins adjacents à celui-ci, ce qui permet, lors de la saisie du front avant de la nappe de renfort carcasse, d'obtenir deux conformations ou renflements de la nappe. On obtient ainsi, préalablement à la pose de la nappe sur le tambour d'assemblage, une nappe de renfort ayant un front avant ondulé. Le front avant ondulé de la nappe comporte ainsi des conformations qui viennent se positionner au-dessus de deux profilés axialement distants déjà posés sur le tambour d'assemblage lors de la pose de la nappe carcasse sur le tambour d'assemblage.

L'adaptation du profil de la rangée transversale de patins de préhension au profil de la ligne méridienne se fait avant chaque pose de nappe si le profil de la ligne méridienne change d'une pose à une autre ou une seule fois pour plusieurs poses si le profil de la ligne méridienne reste inchangé pour toutes ces poses.

Ainsi, on devance la pose de la nappe de renfort carcasse en conformant le front avant de celle-ci à l'aide du dispositif de transport dont les patins de préhension de la rangée transversale ont été adaptés verticalement de manière à ce que leurs extrémités suivent le profil de la ligne méridienne de l'assemblage déjà présent sur le tambour. Le profil du front avant de la nappe est ainsi adapté, avant la pose, à celui de la ligne méridienne des produits déjà posés sur le tambour. Par profil du front avant de la nappe adapté à celui de la ligne méridienne des produits déjà posés, on comprend un profil non plan qui suit au moins en partie le contour de ladite ligne méridienne. Ainsi, en superposant le front avant de la nappe de renfort carcasse ainsi profilé sur les produits déjà posés sur le tambour d'assemblage, on arrive à obtenir un bon ancrage de la nappe de renfort carcasse et donc une bonne amorce de l'assemblage de celle-ci avant la mise en rotation du tambour.

Il a été constaté, lors des tests effectués en laboratoire, qu'en appliquant ensuite un rouleau d'application déformable, avec une pression préétablie, à partir de points d'ancrage correctement positionnés du front avant de la nappe de renfort carcasse sur les produits déjà posés sur le tambour, tout en faisant tourner simultanément le tambour d'assemblage, on arrive à faire adhérer la nappe de renfort carcasse sur tout le pourtour du tambour, sans présence d'inclusions d'air entre les nappes. On obtient de surcroît un aboutage correct, dans des tolérances serrées, des fronts avant et arrière de la nappe et un recouvrement uniforme au niveau de la soudure, sans décrochement de cette dernière. Il a été également constaté que la tension des câbles de la nappe carcasse est uniforme sur toute la circonférence de la carcasse et qu'il n'y a pas d'occlusion d'air entre la nappe de renfort carcasse et les profilés ou la gomme intérieure.

De préférence, on ajuste la hauteur desdits patins de préhension de manière à ce qu'ils soient agencés à hauteur croissante en partant du centre et en allant vers les extrémités de ladite rangée, tel que vu par rapport au plan de la nappe de renfort carcasse. La hauteur est mesurée entre les extrémités de contact avec la nappe des patins de préhension et le châssis du dispositif. Ainsi, une telle hauteur croissante, tel que vu par rapport au tambour d'assemblage ou au plan de la nappe de renfort, permet de poser la nappe de renfort carcasse à partir du centre du tambour et en allant vers ses extrémités.

Avantageusement, ledit dispositif comprend des premiers patins de préhension agencés au centre de la rangée et des deuxièmes patins de préhension agencés de part et d'autre par rapport aux premiers, les premiers et deuxièmes patins de préhension étant mobiles dans une direction sensiblement radiale par rapport au tambour d'assemblage. Par patins mobiles dans une direction radiale par rapport au tambour d'assemblage, on comprend qu'ils ont une possibilité de déplacement dans un plan vertical qui suit ladite direction radiale lorsque le dispositif de transport se trouve au-dessus de la génératrice supérieure du tambour ou dans un plan vertical parallèle au précédent lorsque le dispositif de transport se trouve à un autre emplacement (ou, lorsque vu par rapport au plan de la nappe de renfort, ce déplacement est perpendiculaire au plan de la nappe). Une pluralité de patins mobiles permet un ajustage plus fin, à des hauteurs différentes de ceux-ci.

De préférence, lesdits deuxièmes patins de préhension sont mobiles dans une deuxième direction sensiblement axiale par rapport au tambour d'assemblage. Par direction axiale, on comprend une direction parallèle à la génératrice du tambour ou au front avant de la nappe de renfort carcasse (ou dans la direction transversale de la nappe). De tels patins mobiles axialement permettent de suivre la forme des profilés protubérants déposés sur le tambour et de compenser la perte à plat du front avant de la nappe de renfort carcasse. Par perte à plat on comprend la différence de longueur entre la nappe de renfort carcasse posée à plat et la même nappe posée sur une génératrice non plane, et elle prend en compte la différence de longueur des fils de la nappe de renfort carcasse entre les deux positions de celle-ci.

Avantageusement, ledit dispositif comprend des troisièmes patins de préhension adjacents aux seconds patins de préhension qui sont mobiles dans une direction sensiblement axiale par rapport au tambour d'assemblage. Ces troisièmes patins assurent, comme les précédents, la compensation de la perte à plat de la nappe de renfort carcasse, notamment lors de l'ancrage des zones de la nappe comprises entre un profilé et le bord latéral de la nappe.

De préférence, lesdits patins de préhension sont réalisés de manière à ce que le plan de contact de leur extrémité de préhension soit ajustable à la forme de la surface de pose. De tels patins de préhension peuvent donc comporter une extrémité souple, telles les ventouses à soufflet souple, ou encore être de construction rigide, mais montés sur une rotule. Ceci permet une adaptation plus fine du patin de préhension à une génératrice non plane.

Avantageusement, lesdits patins de préhension sont montés moyennant des moyens élastiques de rappel par rapport au châssis du dispositif de transport.

De préférence, l'on adapte le profil de ladite rangée transversale à l'aide d'un barreau profilé. Ceci permet d'assurer le réglage de tous les patins simultanément, de manière simplifiée.

Avantageusement, ledit barreau profilé est monté sur ledit châssis. Ceci permet le maintien en position de réglage des patins de préhension. Avantageusement, ledit barreau est monté amovible par rapport au châssis afin de pouvoir adapter un même dispositif de transport à différents profilés.

Avantageusement, le rouleau d'application a une largeur dans la direction axiale sensiblement égale à la largeur de la nappe de renfort carcasse. Ceci permet d'appliquer une même pression en même temps sur toute la largeur de la nappe.

De préférence, le rouleau d'application est un rouleau multidisques. Ceci permet d'assurer une adaptation fine au profil de la génératrice non plane, avec une application de pression uniforme dans plusieurs points de contact.

Le but de l'invention est également atteint avec un dispositif de transport de nappe de renfort carcasse pour un procédé de fabrication d'ébauche de pneumatique par enroulement d'une nappe de renfort carcasse sur un tambour d'assemblage rotatif cylindrique, ledit dispositif comportant des moyens de transfert de la nappe de renfort carcasse entre un poste d'approvisionnement et ledit tambour, ainsi qu'un châssis supportant une rangée transversale de patins de préhension disposés en ligne, parallèlement audit front avant de la nappe de renfort carcasse. Ledit dispositif de transport est caractérise en ce qu'au moins l'un des patins de préhension est monté mobile par rapport aux patins adjacents entre une position dans laquelle tous les patins sont situés dans un même plan et une deuxième position dans laquelle au moins ledit patin est décalé en hauteur par rapport aux patins adjacents de manière à adapter le profil de ladite rangée transversale de patins au profil galbé d'une ligne méridienne définissant une surface de pose sur ledit tambour.

D'autres caractéristiques avantageuses du dispositif font l'objet des revendications secondaires.

L'invention sera mieux comprise grâce à la suite de la description, qui s'appuie sur les figures suivantes :
- la figure 1 représente une vue schématique en coupe transversale réalisée avec un plan perpendiculaire à l'axe longitudinal du tambour d'assemblage illustrant le dispositif de transport de l'invention avant de saisir la nappe de renfort carcasse ;
- la figure 2 représente une vue schématique en coupe transversale réalisée avec le plan A-A de la figure 9 illustrant le dispositif de transport de l'invention pendant la pose du front avant de la nappe carcasse sur le tambour d'assemblage ;
- la figure 3 représente une vue schématique en coupe transversale réalisée avec un plan perpendiculaire à l'axe longitudinal du tambour d'assemblage illustrant le dispositif de transport de l'invention pendant la pose de la nappe de renfort carcasse sur le tambour d'assemblage ;
- la figure 4 représente une vue schématique en coupe longitudinale du dispositif de transport de l'invention en position de repos, après le réglage des dispositifs de préhension en vue d'une pose de la nappe de renfort carcasse sur un tambour d'assemblage ayant une génératrice plane ;
- la figure 5 représente une vue schématique en coupe longitudinale du dispositif de transport de l'invention en position de repos après le réglage des dispositifs de préhension en vue d'une pose de la nappe de renfort carcasse sur un tambour d'assemblage ayant une génératrice non plane;
- la figure 6 représente une vue schématique en coupe longitudinale du dispositif de transport de la figure 5 venant en prise avec la nappe carcasse ;
- la figure 7 représente une vue schématique en coupe longitudinale du dispositif de transport de la figure 6 lors du transfert de la nappe carcasse en partant du poste d'approvisionnement ;
- la figure 8 représente une vue schématique en coupe longitudinale du dispositif de transport de la figure 7 lorsqu'il se trouve au niveau du tambour d'assemblage ;
- la figure 9 représente une vue schématique en coupe longitudinale du dispositif de transport de la figure 8 illustrant la pose du front avant de la nappe carcasse sur le tambour d'assemblage ;
- la figure 10 représente une vue schématique de dessous du dispositif de transport de l'invention ;
- la figure 11 représente une vue en coupe réalisée avec le plan B-B de la figure 10,
- la figure 12 représente une vue en coupe réalisée avec le plan C-C de la figure 10.

Sur les différentes figures, les éléments identiques ou similaires portent la même référence. Leur description n'est donc pas systématiquement reprise.

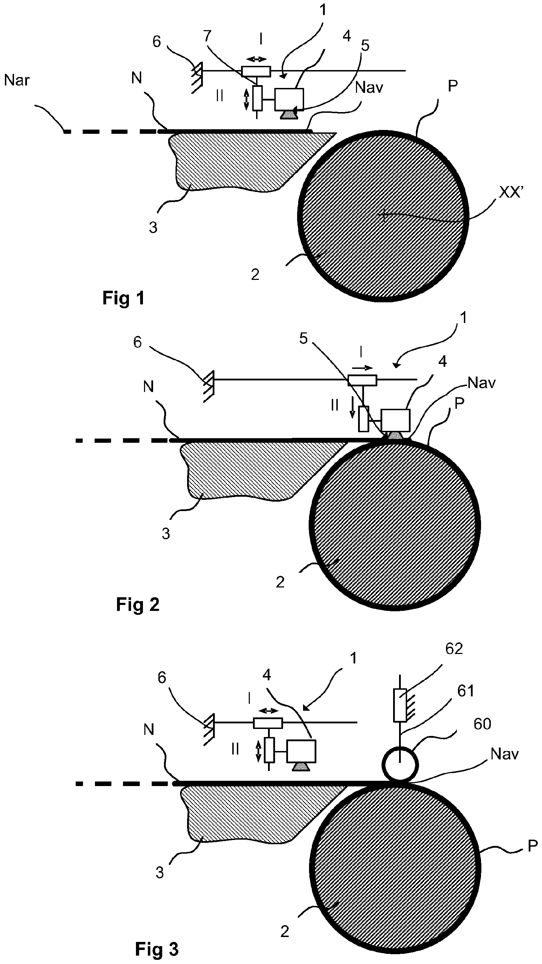

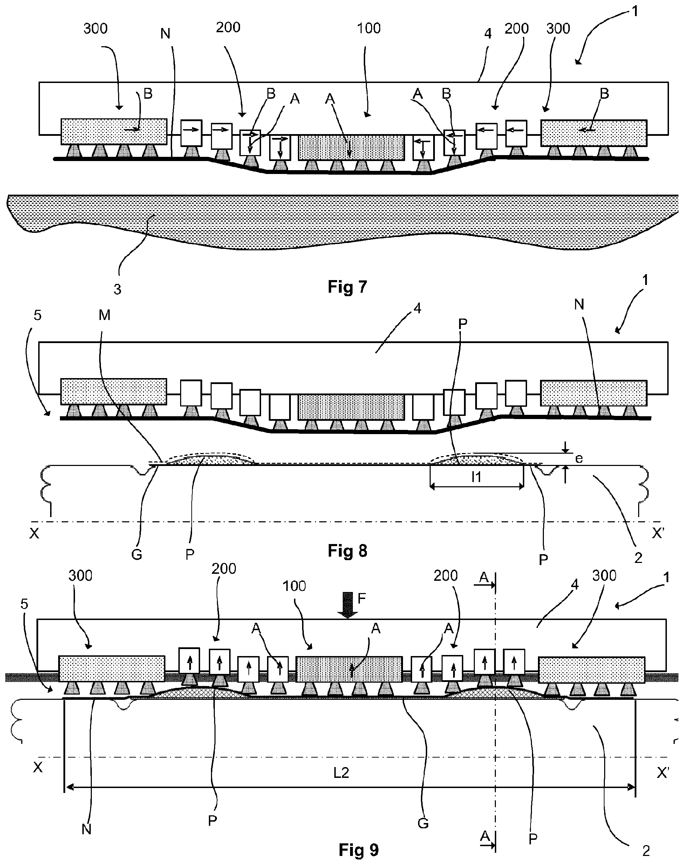

Sur la figure 1, on distingue un tambour d'assemblage 2 de forme cylindrique de section circulaire d'axe longitudinal XX'. Le tambour d'assemblage 2 comporte des moyens d'entrainement en rotation autour de son axe longitudinal XX'. Sur ce tambour ont été déposés une gomme d'étanchéité intérieure G et des profilés P d'épaisseur e. La figure 8 montre deux profilés de renfort de flanc déposés axialement distants l'un de l'autre et le profil galbé de la ligne méridienne M (représentée par un tracé en pointillé) de l'assemblage présent sur le tambour avant la pose de la nappe de renfort carcasse N.

En référence aux figures annexées, il est décrit un assemblage d'un pneumatique comportant une architecture simple formée d'une gomme d'étanchéité G, de deux profilés de renfort de flanc P et d'une nappe de renfort carcasse N. Il va de soi que le procédé et le dispositif de l'invention peuvent s'appliquer aussi bien à des pneumatiques ayant des architectures plus complexes, comportant par exemple plusieurs nappes de renfort carcasse et plusieurs profilés de renfort de flanc.

Sur la figure 1, on remarque la nappe de renfort carcasse N disposée sur un poste de stockage qui est représenté par une table de pose 3 comportant une surface plane horizontale de réception de nappe. Par plan horizontal on comprend un plan parallèle au plan tangent à la génératrice supérieure du tambour d'assemblage 2 et par plan vertical un plan perpendiculaire au plan horizontal et passant par l'axe du tambour. Un dispositif de coupe de la nappe de renfort carcasse N (non représenté sur les dessins) est agencé à proximité de la table de pose 3 et réalise une coupe en longueur de la nappe. Dans une variante, le poste de stockage peut être un rouleau sur lequel est enroulée la nappe de renfort carcasse N et qui peut être combiné ou pas avec un dispositif de coupe en longueur de la nappe. La partie de la nappe de renfort carcasse N située en regard du tambour d'assemblage, qui est parallèle à la génératrice de ce dernier, forme un front avant Nav au-dessus duquel vient se placer un dispositif de transport 1.

Le dispositif de transport 1 comprend un cadre 7 de support d'un châssis 4 comportant une pluralité de patins de préhension du front avant Nav de la nappe de renfort carcasse N, lesdits patins formant une rangée transversale 5. Le cadre 7 est monté avec une possibilité de déplacement en translation dans la direction I (longitudinale) et le châssis 4 avec une possibilité de déplacement en translation dans la direction II (verticale) par rapport à une base fixe 6. Le déplacement en translation selon la direction I permet un mouvement d'avance et de recul du dispositif de transport 1 entre la table de pose 3 et le tambour d'assemblage 2 et s'effectue à l'aide d'un moteur électrique ou d'un vérin pneumatique (non représentés) qui déplace le cadre 7 sur des rails horizontaux 8. Le déplacement en translation selon la deuxième direction II permet un mouvement de monte et baisse du dispositif de transport 1 par rapport à la table de pose 3 ou au tambour d'assemblage 2 et s'effectue à l'aide d'un moteur électrique ou d'un vérin pneumatique (non représentés) qui déplace le châssis 4 sur des rails verticaux 9. Le déplacement en translation selon la deuxième direction II permet le mouvement du dispositif de transport 1 entre une première position de repos et une deuxième position active où il saisit la nappe de renfort carcasse sur la table de pose 3.

Les patins de préhension sont disposés en ligne et forment une rangée transversale 5 qui est parallèle au front avant Nav de la nappe de renfort carcasse. Les patins de préhension sont disposés côte-à-côte dans la direction transversale de la nappe de renfort carcasse N, sensiblement sur toute la largeur de celle-ci. On comprend par direction transversale, une direction parallèle au front avant de la nappe carcasse et à l'axe longitudinal XX' du tambour d'assemblage 2. On comprend par largeur de la nappe de renfort carcasse sa dimension mesurée dans la direction transversale, comprise entre les deux bords latéraux de la nappe, et par longueur la dimension mesurée dans la direction longitudinale, comprise entre le front avant Nav et le front arrière Nar.

Dans l'exemple représenté aux figures, le châssis 4 supporte la rangée transversale 5 de patins de préhension qui sont montés mobiles par rapport audit châssis. Dans une variante, les patins de préhension sont mobiles indépendamment l'un par rapport à l'autre et par rapport au châssis 4. Toutefois, pour des raisons de simplification constructive, on préfère monter certains patins sur un support mobile commun. Les patins de préhension peuvent être des barrettes à vide ou des aimants montés chacun sur une rotule ou encore des ventouses à soufflet souple. Dans l'exemple représenté aux figures, les patins de préhension sont des ventouses à soufflet souple reliées à des sources de vide. Les ventouses à soufflet souple sont préférées grâce à la flexibilité d'adaptation de l'extrémité de préhension à une forme en relief, notamment de par la capacité de déformation du soufflet souple autour de l'axe longitudinal de la ventouse.

Selon l'invention, au moins l'un des patins de préhension est mobile en hauteur par rapport aux patins adjacents de manière à adapter le profil de ladite rangée au profil de la ligne méridienne M avant de saisir le front avant Nav de la nappe de renfort carcasse N. Dans l'exemple représenté aux figures, plusieurs patins de préhension sont réglables en hauteur selon un profil donné et tous les patins de préhension sont mobiles, ce qui permet d'obtenir une adaptation encore plus fidèle du profil de la rangée à celui de la ligne méridienne M. Les possibilités de mouvement de ces patins ou ventouses permettent une mise en conformité du profil de leurs extrémités de préhension avec le profil de la ligne méridienne M avant la saisie du front avant Nav de la nappe de renfort carcasse N.

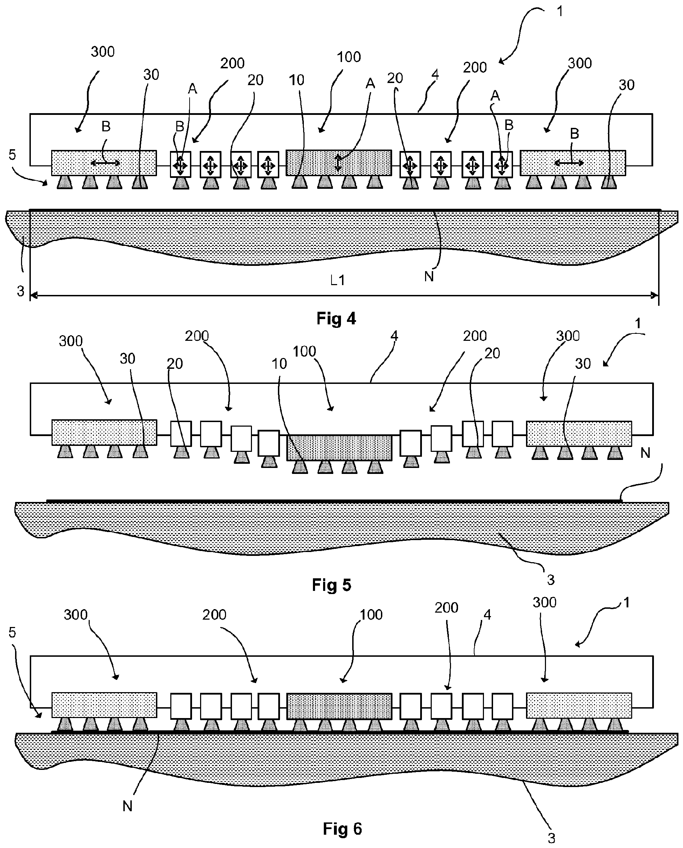

Tel que mieux visible à la figure 4, le dispositif de transport 1 comprend des premiers patins de préhension 100, comprenant plusieurs ventouses centrales 10, qui sont mobiles dans une direction sensiblement radiale par rapport au tambour d'assemblage, direction qui est sensiblement perpendiculaire au plan de la nappe de renfort carcasse N, dans le sens des flèches A de la fig. 4. Les ventouses centrales 10 sont agencées dans la zone centrale du châssis 4.

Le dispositif de transport 1 comprend également des deuxièmes patins de préhension 200, agencés de part et d'autres des premiers patins de préhension 100 et comprenant des ventouses intermédiaires 20. Les deuxièmes patins de préhension 200 sont mobiles dans une première direction sensiblement radiale par rapport au tambour d'assemblage 2, direction qui est sensiblement perpendiculaire au plan de la nappe de renfort carcasse N, dans le sens des flèches A, et également dans une deuxième direction sensiblement axiale par rapport au tambour (ou transversale à la nappe), dans le sens des flèches B de la fig. 4.

Le dispositif comprend par ailleurs des troisièmes patins de préhension 300 disposés adjacents aux deuxièmes patins de préhension 200, en étant agencés vers les extrémités de la rangée et donc du châssis 4 du dispositif. Les troisièmes patins de préhension 300 comprennent des ventouses latérales 30 et sont mobiles dans une direction sensiblement axiale par rapport au tambour d'assemblage 2 (ou transversale à la nappe de renfort carcasse N), dans le sens des flèches B de la fig. 4.

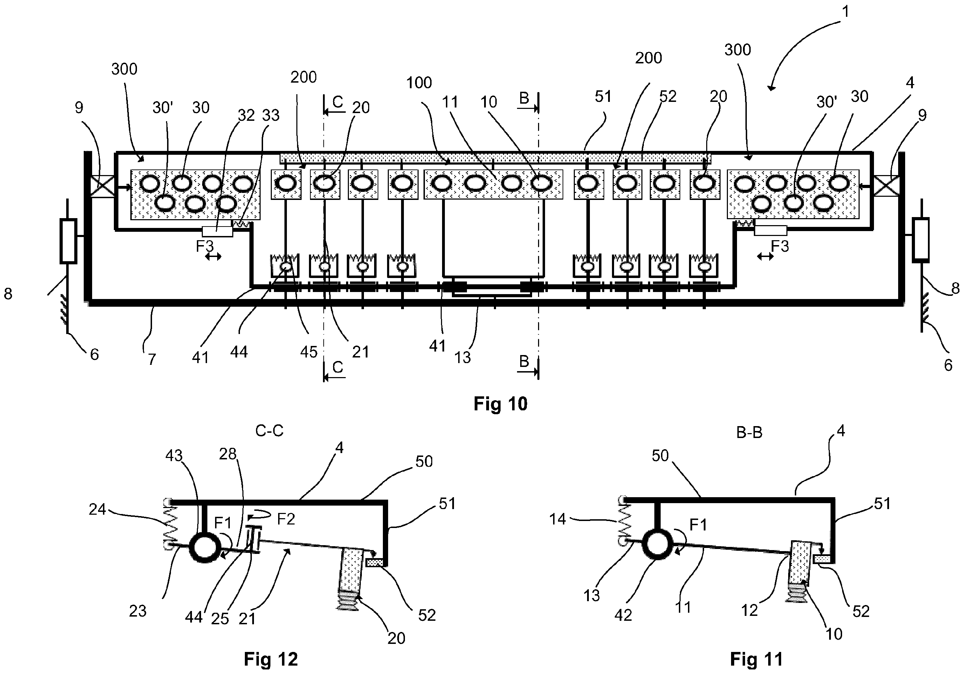

Un exemple de réalisation du dispositif de transport 1 de l'invention est mieux visible à la figure 10. Il comprend un cadre 7 qui a une forme générale en U et supporte à l'intérieur le châssis 4. Le châssis 4 est une pièce de forme générale parallélépipédique ouverte vers le bas en direction du tambour d'assemblage, dont la paroi supérieure 50 supporte les patins de préhension et la paroi frontale 51 supporte un barreau profilé 52. Le barreau profilé 52 a un profil transversal proche du contour de la ligne méridienne M. Il est de préférence monté amovible sur la partie interne de la paroi frontale 51, de manière à pouvoir adapter le dispositif de transport 1 à différentes formes et dimensions d'ébauches de pneumatique.

Dans l'exemple représenté à la figure 10, au centre du châssis 4 sont agencés les premiers patins de préhension 100 comportant cinq ventouses centrales 10 agencées sur un cadre commun 11. Le cadre 11 a une forme générale rectangulaire, il comporte un côté transversal avant 12 supportant une rangée de cinq ventouses centrales 10 et un côté transversal arrière 13 qui est monté rotatif (selon la flèche F1), moyennant une articulation pivotante 42, autour d'un axe transversal 41 du châssis 4. Le support 11 est relié à son extrémité arrière par un ressort de traction 14 au châssis 4 (fig. 11). Le côté transversal avant 11 a une longueur comparable, de préférence légèrement inférieure, à la distance entre les profilés P, le nombre des ventouses centrales 10 étant choisi en fonction de cette distance. Les ventouses centrales 10 sont reliées ensemble à une source de vide (non représentée sur les dessins).

Les ventouses intermédiaires 20 des deuxièmes patins de préhension 200 sont agencées de part et d'autre du cadre 11 supportant les ventouses centrales 10 des premiers patins de préhension 100. Dans l'exemple illustré aux figures 9 à 11, quatre ventouses intermédiaires 20 sont agencées de chaque côté du cadre 11. Chaque ventouse intermédiaire 20 est montée à l'extrémité d'un bras articulé 21. Chaque bras articulé 21 a une forme générale allongée comportant une ventouse intermédiaire 20 montée à son extrémité avant 22, alors que l'extrémité arrière 23 comporte une double articulation pivotante. Tel que mieux visible à la figure 12, le bras articulé 21 est monté rotatif autour de l'axe transversal 41 (selon la flèche F1), moyennant une première articulation pivotante 43, et autour d'un axe 25 sensiblement vertical, sensiblement perpendiculaire au premier, moyennant une deuxième articulation pivotante 44 (selon flèche F2). L'extrémité arrière 23 est reliée par un ressort de traction 24 au châssis 4 et par une tige 28 à l'articulation pivotante 44. Le pivotement autour de l'axe 25 se fait sous la poussée d'un ressort 45. Le nombre des ventouses intermédiaires 20 est choisi en fonction de dimensions, notamment épaisseur « e » et largeur « 1 » des profilés P. Chaque ventouse intermédiaire 20 est reliée à une source de vide (non représentée sur les dessins).

Tel que mieux visible à la figure 10, les troisièmes patins de préhension 300 comportent plusieurs ventouses latérales 30 agencées sur un support latéral 31 commun monté mobile latéralement par rapport au châssis 4. Le support latéral 31 est monté coulissant axialement par rapport au tambour d'assemblage (ou transversalement par rapport à la nappe de renfort carcasse) sur une glissière 32 sous la poussée d'un ressort de compression 33 (dans la direction indiquée par la flèche F3). Les ventouses latérales 30 sont alignées transversalement avec les ventouses intermédiaires 20 et avec les ventouses centrales 10, leur nombre étant choisi en fonction de la largeur de la nappe carcasse N à au-delà des profilés P. Avantageusement, une deuxième rangée de ventouses latérales 30' est agencée parallèlement à la précédente sur le même support latéral 31 commun, les ventouses 30' étant agencées en quinconce par rapport aux ventouses 30. Ceci permet d'assurer une meilleure prise de la nappe de renfort carcasse N et un réglage plus fin du mouvement d'avance du dispositif de transport 1. Les ventouses latérales 10 de chaque support latéral 31 commun sont reliées ensemble à une source de vide (non représentée sur les dessins).

A titre d'exemple, les ventouses à soufflet souple qui composent le dispositif de transport 1 sont agencées à distance sensiblement égale l'une de l'autre, elles ont un diamètre d'environ 20 mm et l'entraxe entre deux ventouses adjacentes est de 30 mm.

En fonctionnement, avant de saisir la nappe de renfort carcasse N sur la table de pose 3, le dispositif de transport 1 subit une opération d'adaptation du profil de préhension, qui est un contour imaginaire passant par les extrémités de préhension des ventouses de la rangée transversale 5, au contour de la ligne méridienne M. Ainsi, la rangée transversale 5 du dispositif de transport 1 passe d'une position initiale où les ventouses centrales 10 et intermédiaires 20 sont entraînées constamment vers le bas par les ressorts 14 et 24, à une position dite profilée de celles-ci (fig. 5) en prenant appui sur le barreau profilé 52. Le barreau profilé 52 est utilisé comme une butée mécanique pour les supports des ventouses centrales 10 et intermédiaires 20 qui sont mobiles radialement par rapport au tambour d'assemblage 2 ou perpendiculairement au plan et à la direction longitudinale de la nappe carcasse. Pour ceci, le profil du barreau profilé 52, tel que vu en partant du centre de la ligne méridienne M, est similaire à celui de la ligne méridienne M jusqu'au niveau des sommets S des profilés P, puis il se prolonge selon la tangente au sommet S de part et d'autres des profilés P. Lors de l'opération d'adaptation du profil du dispositif à celui du barreau profilé 52, le support 11 et les bras articulés 21 pivotent autour de leurs articulations 42 et 43, de manière à prendre appui avec leurs extrémités frontales sur le barreau profilé 52 (fig. 11 et 12). En l'absence du barreau profilé 52, le support 11 et les bras articulés 21 sont entraînés vers le bas sous l'action des ressorts 14 et 24.

La figure 6 illustre le dispositif de transport 1 en train de saisir la nappe de renfort carcasse N sur la table de pose 3. Le déplacement en direction longitudinale I du dispositif de transport 1 a été commandé au préalable de manière à ce que le dispositif arrive dans une position située au-dessus du front avant Nav, dans la position illustrée à la fig. 1. Ensuite, le dispositif effectue un déplacement vertical descendant selon la direction II, jusqu'à ce que toutes les ventouses, y compris les ventouses latérales 30 touchent le front avant Nav de la nappe carcasse N, les ventouses intermédiaires 20 et les ventouses centrales 10 se déplaçant, à l'encontre de la force de leurs ressorts respectifs, et se positionnent au même niveau (dans un même plan) que les ventouses latérales 30, au contact du front avant Nav de la nappe de renfort carcasse N. On procède ensuite à la mise en dépression des ventouses et on imprime au châssis 4 un mouvement vertical ascendant selon la direction II. Le dispositif de transport 1 remonte et soulève la nappe de renfort carcasse N de la table de pose 3. En remontant, les ventouses intermédiaires 20 et les ventouses centrales 10 reprennent leur position initiale sous l'action de leurs ressorts respectifs (selon les flèches A), ce qui a pour résultat d'imposer un profil au front avant Nav de la nappe de renfort carcasse N (fig. 7). Lors de cette phase de reprise de la position initiale ou de repos des ventouses intermédiaires 20 et centrales 10, le front avant Nav de la nappe de renfort carcasse N subit une première conformation sur une protubérance (ou perte à plat) qui est prise en compte par le déplacement axial (selon les flèches B) des ventouses intermédiaires 20 et latérales 30.

Le dispositif de transport 1 se déplace ensuite horizontalement, selon la direction I, depuis la table de pose 3 et jusqu'à ce que le front avant Nav se trouve au-dessus de la génératrice du tambour d'assemblage 2 (fig. 8). Le dispositif de transport 1 se déplace radialement en direction du tambour pour y appliquer la nappe de renfort carcasse N (selon la flèche F de la figure 8). Lors de cette phase de descente du dispositif, vu l'agencement progressif à hauteur croissante des extrémités de préhension des ventouses en partant du centre du dispositif, la nappe de renfort carcasse N est appliquée sur le tambour en déposant successivement la partie de nappe située au centre, puis progressivement les parties situées axialement aux deux extrémités de la nappe. Ce mode opératoire présente l'avantage de permettre une meilleure évacuation de l'air compris entre la nappe de renfort carcasse N et les profilés P, tout en assurant une perte à plat progressive de la nappe de renfort carcasse N jusqu'à atteindre sa longueur L2 (fig. 9). La différence entre la longueur initiale L1 de la nappe N et la longueur finale L2 est appelée perte à plat. Ceci a pour résultat un bon ancrage du front avant Nav sur la génératrice du tambour d'assemblage 2 (fig. 9). Les ventouses sont ensuite désactivées et le dispositif de transport 1 remonte radialement et se déplace longitudinalement en direction de la table de pose 3 et attend pour saisir une nouvelle nappe de renfort carcasse N.

La figure 3 illustre la dernière étape du procédé qui consiste à appliquer un rouleau d'application 60 déformable sur la nappe de renfort carcasse N en même temps que l'on met en rotation le tambour d'assemblage 2. La nappe se trouve sur la table de pose et est entraînée par la rotation du tambour, un dispositif de coupe venant la couper en longueur vers la fin de l'enroulement. Un châssis 61 qui supporte le rouleau d'application 60 déformable dans la direction radiale est amené, par l'intermédiaire d'un vérin d'application 62, au contact du front avant Nav de la nappe de renfort carcasse et le tambour d'assemblage 2 est mis en rotation. Le rouleau d'application 60 déformable de l'exemple représenté est un rouleau d'emploi courant de type comportant un ensemble de plusieurs disques agencés côte-à-côte et mobiles radialement les uns par rapport aux autres. Un dispositif pneumatique force chacun des disques à se déplacer dans la direction radiale jusqu'à ce que le disque vienne en contact avec le profil de pose. La largeur du rouleau d'application 60 déformable correspond sensiblement à la largeur L2 de la nappe de renfort carcasse N, ce qui fait que les points de mise en contact du rouleau d'application déformable sont répartis sur toute la largeur de la nappe et permettent une application correcte de celle-ci sur le tambour d'assemblage 2. Dans une variante de réalisation de l'invention, un rouleau d'application en mousse est utilisé à la place du rouleau multidisques ci-dessous, notamment pour des profilés P d'épaisseur moindre, par exemple inférieure à 6 mm.

Des tests ont été effectués en laboratoire avec le dispositif de l'invention en déposant la nappe de renfort carcasse N sur des profilés de différentes épaisseurs « e » appliqués sur une première couche de gomme intérieure G. De très bons résultats en termes d'uniformité des câbles de la nappe de renfort carcasse N sur la circonférence de la carcasse, de bonne adhérence, sans inclusions d'air, entre la nappe de renfort carcasse N et la gomme interne G et entre la nappe et les profilés P, sur toute la longueur de la ligne méridienne M. De bons résultats d'adhésion de la soudure des bords de nappe carcasse, avec un recouvrement uniforme à la soudure ont été obtenus avec des profilés ayant une épaisseur inférieure ou égale à 15 mm.

D'autres variantes et modes de réalisation de l'invention peuvent être envisagés sans sortir du cadre de ses revendications. Ainsi, les ventouses du dispositif de transport peuvent être actionnées en mouvement par tout autre mécanisme, par exemple utilisant des glissières et des rails de guidage à la place des articulations pivotantes, tout en respectant la cinématique décrite.

Par ailleurs, l'ajustement en hauteur des ventouses du dispositif de transport se faisant facilement à l'aide d'un barreau profilé amovible, le dispositif de transport de l'invention peut être utilisé pour saisir et poser une nappe de renfort carcasse aussi bien sur une génératrice profilée que sur une génératrice plane, dans ce dernier cas toutes les ventouses étant réglées à une même hauteur avant de saisir la nappe en utilisant un barreau profilé à profil rectiligne.

## Revendications

1. Procédé de fabrication d'ébauche de pneumatique par enroulement d'une nappe de renfort carcasse (N) sur un tambour d'assemblage (2) rotatif cylindrique de section circulaire dont la génératrice est rectiligne et définit une première surface de pose sur laquelle sont déposés plusieurs profilés (P) axialement distants l'un de l'autre ayant une épaisseur donnée dont la ligne méridienne (M) présente un profil galbé et définit une deuxième surface de pose, dans lequel :
- on saisit le front avant (Nav) de la nappe de renfort carcasse (N) à l'aide d'un dispositif de transport (1) comportant un châssis (4) supportant une rangée transversale (5) de patins de préhension disposés en ligne, parallèlement audit front avant,
- on transfère la nappe de renfort carcasse (N), à l'aide dudit dispositif de transport (1), entre un poste d'approvisionnement et ledit tambour,
- on dépose le front avant (Nav) de ladite nappe sur le tambour d'assemblage (2),
- on retire ledit dispositif de transport (1),
- on applique un rouleau d'application (60) à profil déformable sur le front avant (Nav) de ladite nappe et on exerce une pression dans la direction radiale sur la largeur de celle-ci correspondant aux points de mise en contact de la nappe de renfort carcasse avec ladite ligne méridienne (M) et on fait tourner ledit tambour, **caractérisé en ce qu'**au moins l'un des patins de préhension est monté mobile par rapport aux patins adjacents entre une position dans laquelle tous les patins sont situés dans un même plan et une deuxième position dans laquelle au moins ledit patin est décalé en hauteur par rapport aux patins adjacents de manière à adapter le profil de ladite rangée transversale (5) de patins au profil galbé de la ligne méridienne (M) de ladite deuxième surface de pose.

2. Procédé selon la revendication 1, **caractérisé en ce que** l'on ajuste la hauteur desdits patins de préhension de manière à ce qu'ils soient agencés à hauteur croissante en partant du centre et en allant vers les extrémités de ladite rangée transversale (5) tel que vu par rapport au plan de la nappe de renfort carcasse (N).

3. Procédé selon l'une des revendications 1 ou 2, **caractérisé en ce que** ledit dispositif de transport (1) comprend des premiers patins de préhension (100) agencés au centre de ladite rangée et des deuxièmes patins de préhension (200) agencés de part et d'autre par rapport aux premiers, les premiers et deuxièmes patins de préhension étant mobiles dans une direction sensiblement radiale par rapport au tambour d'assemblage (2).

4. Procédé selon la revendication 3, **caractérisé en ce que** lesdits deuxièmes patins de préhension (200) sont mobiles dans une deuxième direction sensiblement axiale par rapport au tambour d'assemblage (2).

5. Procédé selon l'une des revendications 3 ou 4, **caractérisé en ce que** ledit dispositif comprend des troisièmes patins de préhension (300) adjacents aux deuxièmes patins de préhension (200) qui sont mobiles dans une direction sensiblement axiale par rapport au tambour d'assemblage (2).

6. Procédé selon l'une des revendications précédentes, **caractérisé en ce que** lesdits patins de préhension sont réalisés de manière à ce que le plan de contact de leur extrémité de préhension soit ajustable à la forme de la surface de pose.

7. Procédé selon l'une des revendications précédentes, **caractérisé en ce que** l'on adapte ledit profil de la rangée transversale (5) à l'aide d'un barreau profilé (52).

8. Dispositif de transport (1) de nappe de renfort carcasse (N) pour un procédé de fabrication d'ébauche de pneumatique par enroulement d'une nappe de renfort carcasse (N) sur un tambour d'assemblage (2) rotatif cylindrique, ledit dispositif comportant des moyens de transfert de la nappe de renfort carcasse entre un poste d'approvisionnement et ledit tambour, ainsi qu'un châssis (4) supportant une rangée transversale (5) de patins de préhension disposés en ligne, parallèlement audit front avant (Nav) de la nappe de renfort carcasse (N), **caractérise en ce qu'**au moins l'un des patins de préhension est monté mobile par rapport aux patins adjacents entre une position dans laquelle tous les patins sont situés dans un même plan et une deuxième position dans laquelle au moins ledit patin est décalé en hauteur par rapport aux patins adjacents de manière à adapter le profil de ladite rangée transversale (5) de patins au profil galbé d'une ligne méridienne (M) définissant une surface de pose sur ledit tambour.

9. Dispositif selon la revendication 8, **caractérisé en ce qu'**il comprend des moyens de réglage qui ajustent la hauteur desdits patins de préhension de manière à ce qu'ils soient agencés à hauteur croissante en partant du centre et en allant vers les extrémités de ladite rangée transversale (5).

10. Dispositif selon l'une des revendications 8 ou 9, **caractérisé en ce qu'**il comprend des premiers patins de préhension (100) agencés au centre de ladite rangée transversale (5) et des deuxièmes patins de préhension (200) agencés de part et d'autre par rapport aux premiers, les premiers et deuxièmes patins de préhension étant mobiles dans une direction sensiblement radiale par rapport au tambour d'assemblage (2).

11. Dispositif selon la revendication 10, caractérisé en ce lesdits deuxièmes patins de préhension sont mobiles dans une deuxième direction sensiblement axiale par rapport au tambour d'assemblage (2).

12. Dispositif selon l'une des revendications 10 ou 11, **caractérisé en ce qu'**il comprend des troisièmes patins de préhension (300) adjacents aux seconds patins de préhension (200) qui sont mobiles dans une direction sensiblement axiale par rapport au tambour d'assemblage (2).

13. Dispositif selon l'une des revendications 8 à 12, **caractérisé en ce que** lesdits patins de préhension sont réalisés de manière à ce que le plan de contact de leur extrémité de préhension soit ajustable à la forme de la surface de pose.

14. Dispositif selon l'une des revendications 8 à 13, **caractérisé en ce que** lesdits patins de préhension sont montés moyennant des moyens élastiques de rappel par rapport au châssis (4).

15. Dispositif selon l'une des revendications 8 à 14, **caractérisé en ce que** l'on adapte ledit profil de la rangée transversale (5) à l'aide d'un barreau profilé (52).

## Patentansprüche

1. Verfahren zur Herstellung eines Luftreifenrohlings durch Wickeln einer Karkassenverstärkungslage (N) auf eine zylindrische drehende Aufbautrommel (2) mit kreisförmigem Querschnitt, deren Mantellinie geradlinig ist und eine erste Verlegefläche definiert, auf die mehrere axial zueinander beabstandete Profilteile (P) aufgebracht werden, die eine gegebene Dicke haben, deren Meridianlinie (M) ein gewölbtes Profil aufweist und eine zweite Verlegefläche definiert, wobei:
- die vordere Stirnseite (Nav) der Karkassenverstärkungslage (N) mit Hilfe einer Transportvorrichtung (1) ergriffen wird, die ein Gestell (4) aufweist, das eine Querreihe (5) von in Reihe angeordneten Greifschuhen parallel zur vorderen Stirnseite trägt,
- die Karkassenverstärkungslage (N) mit Hilfe der Transportvorrichtung (1) zwischen einer Beschickungsstation und der Trommel übertragen wird,
- die vordere Stirnseite (Nav) der Lage auf die Aufbautrommel (2) aufgebracht wird,
- die Transportvorrichtung (1) entfernt wird,
- eine Auflegewalze (60) mit verformbarem Profil auf die vordere Stirnseite (Nav) der Lage aufgelegt und ein Druck in der radialen Richtung über deren Breite entsprechend den Kontaktpunkten der Karkassenverstärkungslage mit der Meridianlinie (M) ausgeübt und die Trommel gedreht wird,
**dadurch gekennzeichnet, dass** mindestens einer der Greifschuhe bezüglich der benachbarten Schuhe zwischen einer Stellung, in der alle Schuhe sich in der gleichen Ebene befinden, und einer zweiten Stellung beweglich montiert ist, in der mindestens der Schuh in der Höhe bezüglich der benachbarten Schuhe versetzt ist, um das Profil der Querreihe (5) von Schuhen an das gewölbte Profil der Meridianlinie (M) der zweiten Verlegefläche anzupassen.

2. Verfahren nach Anspruch 1, **dadurch gekennzeichnet, dass** die Höhe der Greifschuhe so eingestellt wird, dass sie ausgehend von der Mitte und zu den Enden der Querreihe (5) in zunehmender Höhe angeordnet sind, wie bezüglich der Ebene der Karkassenverstärkungslage (N) gesehen.

3. Verfahren nach einem der Ansprüche 1 oder 2, **dadurch gekennzeichnet, dass** die Transportvorrichtung (1) erste Greifschuhe (100), die in der Mitte der Reihe angeordnet sind, und zweite Greifschuhe (200) enthält, die zu beiden Seiten bezüglich der ersten angeordnet sind, wobei die ersten und zweiten Greifschuhe in einer im Wesentlichen radialen Richtung bezüglich der Aufbautrommel (2) beweglich sind.

4. Verfahren nach Anspruch 3, **dadurch gekennzeichnet, dass** die zweiten Greifschuhe (200) in einer zweiten im Wesentlichen axialen Richtung bezüglich der Aufbautrommel (2) beweglich sind.

5. Verfahren nach einem der Ansprüche 3 oder 4, **dadurch gekennzeichnet, dass** die Vorrichtung den zweiten Greifschuhen (200) benachbarte dritte Greifschuhe (300) enthält, die in einer im Wesentlichen axialen Richtung bezüglich der Aufbautrommel (2) beweglich sind.

6. Verfahren nach einem der vorhergehenden Ansprüche, **dadurch gekennzeichnet, dass** die Greifschuhe so hergestellt werden, dass die Kontaktebene ihres Greifendes an die Form der Verlegefläche anpassbar ist.

7. Verfahren nach einem der vorhergehenden Ansprüche, **dadurch gekennzeichnet, dass** das Profil der Querreihe (5) mit Hilfe eines Profilstabs (52) angepasst wird.

8. Transportvorrichtung (1) einer Karkassenverstärkungslage (N) für ein Verfahren zur Herstellung eines Luftreifenrohlings durch Wickeln einer Karkassenverstärkungslage (N) auf eine zylindrische drehende Aufbautrommel (2), wobei die Vorrichtung Einrichtungen zur Übertragung der Karkassenverstärkungslage zwischen einer Beschickungsstation und der Trommel sowie ein Gestell (4) aufweist, das eine Querreihe (5) von in Reihe angeordneten Greifschuhen parallel zur vorderen Stirnseite (Nav) der Karkassenverstärkungslage (N) trägt, **dadurch gekennzeichnet, dass** mindestens einer der Greifschuhe bezüglich der benachbarten Schuhe zwischen einer Stellung, in der alle Schuhe sich in der gleichen Ebene befinden, und einer zweiten Stellung beweglich montiert ist, in der mindestens der Schuh bezüglich der benachbarten Schuhe in der Höhe versetzt ist, um das Profil der Querreihe (5) von Schuhen an das gewölbte Profil einer Meridianlinie (M) anzupassen, die eine Verlegefläche auf der Trommel definiert.

9. Vorrichtung nach Anspruch 8, **dadurch gekennzeichnet, dass** sie Einstelleinrichtungen enthält, die die Höhe der Greifschuhe so anpassen, dass sie ausgehend von der Mitte und zu den Enden der Querreihe (5) hin in zunehmender Höhe angeordnet sind.

10. Vorrichtung nach einem der Ansprüche 8 oder 9, **dadurch gekennzeichnet, dass** sie erste Greifschuhe (100), die in der Mitte der Querreihe (5) angeordnet sind, und zweite Greifschuhe (200) enthält, die zu beiden Seiten der ersten angeordnet sind, wobei die ersten und zweiten Greifschuhe in einer im Wesentlichen radialen Richtung bezüglich der Aufbautrommel (2) beweglich sind.

11. Vorrichtung nach Anspruch 10, **dadurch gekennzeichnet, dass** die zweiten Greifschuhe in einer zweiten im Wesentlichen axialen Richtung bezüglich der Aufbautrommel (2) beweglich sind.

12. Vorrichtung nach einem der Ansprüche 10 oder 11, **dadurch gekennzeichnet, dass** sie den zweiten Greifschuhen (200) benachbarte dritte Greifschuhe (300) enthält, die in einer im Wesentlichen axialen Richtung bezüglich der Aufbautrommel (2) beweglich sind.

13. Vorrichtung nach einem der Ansprüche 8 bis 12, **dadurch gekennzeichnet, dass** die Greifschuhe so hergestellt werden, dass die Kontaktebene ihres Greifendes an die Form der Verlegefläche anpassbar ist.

14. Vorrichtung nach einem der Ansprüche 8 bis 13, **dadurch gekennzeichnet, dass** die Greifschuhe mittels elastischer Rückstelleinrichtungen bezüglich des Gestells (4) montiert werden.

15. Vorrichtung nach einem der Ansprüche 8 bis 14, **dadurch gekennzeichnet, dass** das Profil der Querreihe (5) mit Hilfe eines Profilstabs (52) angepasst wird.

## Claims

1. Method for manufacturing a green tyre by winding a carcass reinforcement ply (N) onto a cylindrical rotary tyre-building drum (2) having a circular section of which the generatrix is rectilinear and defines a first laying surface on which a number of profiled elements (P) that are axially spaced apart one from one another and have a given thickness of which the meridian line (M) has a curved profile and defines a second laying surface are laid, wherein:
- the front edge (Nav) of the carcass reinforcement ply (N) is grasped with the aid of a transport device (1) having a chassis (4) that supports a transverse row (5) of gripping pads disposed in a line, in a manner parallel to said front edge,
- the carcass reinforcement ply (N) is transferred, with the aid of said transport device (1), between a supply station and said drum,
- the front edge (Nav) of said ply is laid on the tyre-building drum (2),
- said transport device (1) is withdrawn,
- an applicator roller (60) having a deformable profile is applied to the front edge (Nav) of said ply and a pressure is exerted in the radial direction across the width of said ply corresponding to the points at which the carcass reinforcement ply is brought into contact with said meridian line (M), and said drum is made to rotate, **characterized in that** at least one of the gripping pads is mounted in a movable manner with respect to the adjacent pads between a position in which all of the pads are located in a single plane and a second position in which at least said pad is vertically offset with respect to the adjacent pads so as to adapt the profile of said transverse row (5) of pads to the curved profile of the meridian line (M) of said second laying surface.

2. Method according to Claim 1, **characterized in that** the height of said gripping pads is adjusted such that they are arranged with increasing height from the centre and towards the ends of said transverse row (5), as seen with respect to the plane of the carcass reinforcement ply (N).

3. Method according to either of Claims 1 and 2, **characterized in that** said transport device (1) comprises first gripping pads (100) arranged at the centre of said row and second gripping pads (200) arranged on either side of the first gripping pads, the first and second gripping pads being movable in a substantially radial direction with respect to the tyre-building drum (2).

4. Method according to Claim 3, **characterized in that** said second gripping pads (200) are movable in a substantially axial second direction with respect to the tyre-building drum (2).

5. Method according to either of Claims 3 and 4, **characterized in that** said device comprises third gripping pads (300) adjacent to said second gripping pads (200) which are movable in a substantially axial direction with respect to the tyre-building drum (2).

6. Method according to one of the preceding claims, **characterized in that** said gripping pads are produced such that the plane of contact of their gripping ends is adaptable to the shape of the laying surface.

7. Method according to one of the preceding claims, **characterized in that** said profile of the transverse row (5) is adapted with the aid of a profiled bar (52).

8. Transport device (1) for transporting a carcass reinforcement ply (N) for a method for manufacturing a green tyre by winding a carcass reinforcement ply (N) onto a cylindrical rotary tyre-building drum (2), said device comprising means for transferring the carcass reinforcement ply between a supply station and said drum, and also a chassis (4) that supports a transverse row (5) of gripping pads disposed in a line, in a manner parallel to said front edge (Nav) of the carcass reinforcement ply (N), **characterized in that** at least one of the gripping pads is mounted in a movable manner with respect to the adjacent pads between a position in which all of the pads are located in a single plane and a second position in which at least said pad is vertically offset with respect to the adjacent pads so as to adapt the profile of said transverse row (5) of pads to the curved profile of the meridian line (M) that defines a laying surface on said drum.

9. Device according to Claim 8, **characterized in that** it comprises adjusting means which adjust the height of said gripping pads such that they are arranged with increasing height from the centre and towards the ends of said transverse row (5).

10. Device according to either of Claims 8 and 9, **characterized in that** it comprises first gripping pads (100) arranged at the centre of said transverse row (5) and second gripping pads (200) arranged on either side of the first gripping pads, the first and second gripping pads being movable in a substantially radial direction with respect to the tyre-building drum (2).

11. Device according to Claim 10, **characterized in that** said second gripping pads are movable in a substantially axial second direction with respect to the tyre-building drum (2).

12. Device according to either of Claims 10 and 11, **characterized in that** it comprises third gripping pads (300) adjacent to said second gripping pads (200) which are movable in a substantially axial direction with respect to the tyre-building drum (2).

13. Device according to one of Claims 8 to 12, **characterized in that** said gripping pads are produced such that the plane of contact of their gripping ends is adaptable to the shape of the laying surface.

14. Device according to one of Claims 8 to 13, **characterized in that** said gripping pads are mounted by means of elastic return means with respect to the chassis (4).

15. Device according to one of Claims 8 to 14, **characterized in that** said profile of the transverse row (5) is adapted with the aid of a profiled bar (52).
